# EUROPEAN PATENT APPLICATION

(11) **EP 2 514 643 A2**
(43) Date of publication of application: **24.10.2012**
(21) Application number: 12164438.9
(22) Date of filing: 17.04.2012
(51) Int. Cl.: B60R 25/00

(54) **Vehicle security system and method of operation based on a mobile device location**

(30) Priority: 21.04.2011 US 201113091442
(71) Applicant: Delphi Technologies, Inc., Troy, MI 48007 (US)
(72) Inventor: Tieman, Craig A., Westfield, IN Indiana 46074 (US); Coudre, Jérôme, 77700 Bailly-Romainvilliers (FR); Oman, Todd P., Greentown, IN Indiana 46936 (US)
(74) Representative: Robert, Vincent

(57) **Abstract**

A vehicle security system (10) for a vehicle (12) equipped with a passive keyless entry/passive start security system (14) (PEPS (14)) including a nomadic device (16) configured to determine a present location (20) of the nomadic device (16) (e.g. key fob, smart phone), and a controller configured to control a security-status based on the present location (20). The controller determines the security status based on the proximity of the nomadic device (16) in order to thwart theft of the vehicle (12) using a relay attack.

## Description

### TECHNICAL FIELD OF INVENTION

The invention generally relates to passive keyless entry/passive start vehicle security systems (PEPS), and more particularly relates to a system that determines a location of a nomadic device sending a reply signal to the system and operates the system based on the location of the nomadic device.

### BACKGROUND OF INVENTION

It has been discovered that some passive keyless entry/passive start security systems (PEPS) can be deceived using a two-transceiver/two-person method commonly called a 'relay attack'. The method deceives the vehicle security system by relaying the normally short-range request/reply communications commonly associated with PEPS security systems over relatively long distance without the owner's knowledge. One relay device is located close to the car and a second relay device is positioned close to the car owner carrying a PEPS key fob. Then, in response to pulling a door handle or pushing a start button, the first relay receives a request signal transmitted by the vehicle security system, and relays the information to the second unit relay unit. The second relay unit retransmits the signal to the PEPS key fob. The PEPS key fob will automatically reply to this retransmitted signal which is relayed back to the vehicle to unlock the door or allow the vehicle to be started.

Another problem with PEPS security systems that use proximity detection via a capacitive sensor in the door handle to initiate communications with a PEPS key fob for unlocking a door is that a person can pull the door handle faster than the system can respond, and so the person will not be able to open the door on the first try. This problem is sometimes called a 'wall effect' problem.

### SUMMARY OF THE INVENTION

In accordance with one embodiment of this invention, a vehicle security system for a vehicle equipped with a passive keyless entry/passive start security system (PEPS) is provided. The system includes a nomadic device and a controller. The nomadic device is configured to determine a present location of the nomadic device. The controller is configured to control a security-status based on the present location.

In another embodiment of the present invention, a controller for a vehicle security system of a vehicle equipped with a passive keyless entry/passive start security system (PEPS). The system includes a nomadic device configured to determine a present location of the nomadic device, and transmit a reply signal indicative of the present location. The controller includes a transmitter, a receiver, and a processor. The transmitter is configured to transmit a location request to the nomadic device. The receiver is configured to receive the present location of the nomadic device. The processor is configured to control a security-status based on the present location.

In yet another embodiment of the present invention, a method of operating a vehicle security system is provided. The method includes the step of determining a present location of the nomadic device. The method also includes the step of controlling a security-status based on the present location.

Further features and advantages of the invention will appear more clearly on a reading of the following detailed description of the preferred embodiment of the invention, which is given by way of non-limiting example only and with reference to the accompanying drawings.

### DESCRIPTION OF DRAWINGS

The present invention will now be described, by way of example with reference to the accompanying drawings, in which:

Fig. 1 is an illustration of a vehicle security system having a vehicle in communication with a nomadic device in accordance with one embodiment;

Fig. 2 is a schematic diagram of a passive entry/passive start security system of Fig. 1 in communication with a nomadic device of Fig. 1 in accordance with one embodiment; and

Fig. 3 is a method of operating a vehicle security system of Fig. 1 in accordance with one embodiment.

### DESCRIPTION OF THE PREFERRED EMBODIMENTS

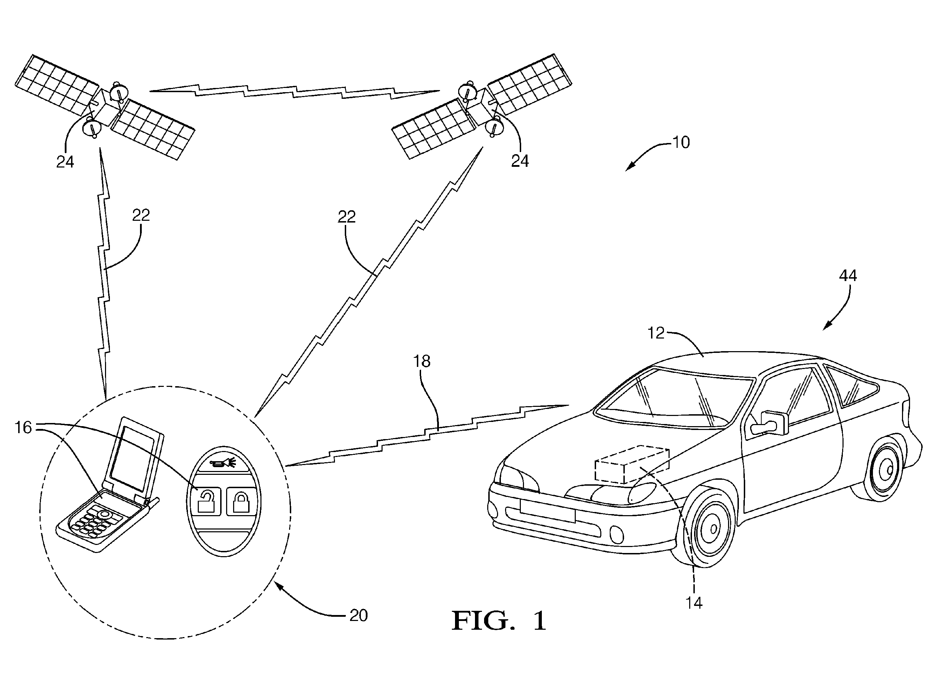

In accordance with an embodiment, Fig. 1 illustrates a vehicle security system 10, hereafter often system 10, for a vehicle 12 equipped with a passive keyless entry/passive start security system 14, hereafter often PEPS 14. The system 10 includes a nomadic device 16 configured to send a reply signal for operating the vehicle 12 over a wireless communications link 18.

In general, passive keyless entry/passive start systems (PEPS) allow a person to operate certain aspects of the vehicle 12, such as opening or unlocking a locked vehicle door, without using a physical key and/or without pressing a button on a key fob. For example, the vehicle 12 may be equipped with touch sensitive door handles that sense contact by the person. Once contact is detected, the PEPS 14 will typically communicate with the nomadic device 16 by transmitting a request to the nomadic device 16 followed by the nomadic device 16 transmitting a reply to verify that an authorized nomadic device is in close proximity to the vehicle 12, and then unlock the vehicle doors if proximity and/or authorization is verified. Similarly, if the person enters the vehicle 12 and presses an engine start button, the PEPS will typically verify that an authorized nomadic device is in or near the vehicle 12 and so will allow the engine to start.

As used herein, a nomadic device is a device able to communicate with the vehicle 12 over the wireless communication link 18. Examples of nomadic devices include, but are not limited to task specific devices such as a typical keyless entry key fob, or more generic devices additionally equipped with a suitable transceiver such as a cellular phone, a smart phone, a personal data assistant (PDA), an electronic tablet, or a music player. Any device that can be equipped with a wireless RF transceiver suitable for communicating with the PEPS 14 may be suitable for use as a nomadic device 16. The nomadic device 16 may also be configured such that as the nomadic device 16 approaches a vehicle equipped with the PEPS 14, the nomadic device 16 will be automatically detected by a request/reply communication exchange between the nomadic device 16 and the PEPS 14. The PEPS 14 uses the request/reply communication exchange to determine that the detected nomadic device is authorized prior to performing some action. This detection at a distance may minimize the wall effect problem associated with some PEPS-type systems. The nomadic device 16 may also be equipped with push-buttons, a touch sensitive screen, or the like so that a person may also use the nomadic device 16 as a non-passive keyless entry transmitter commonly called a remote keyless entry (RKE) transmitter.

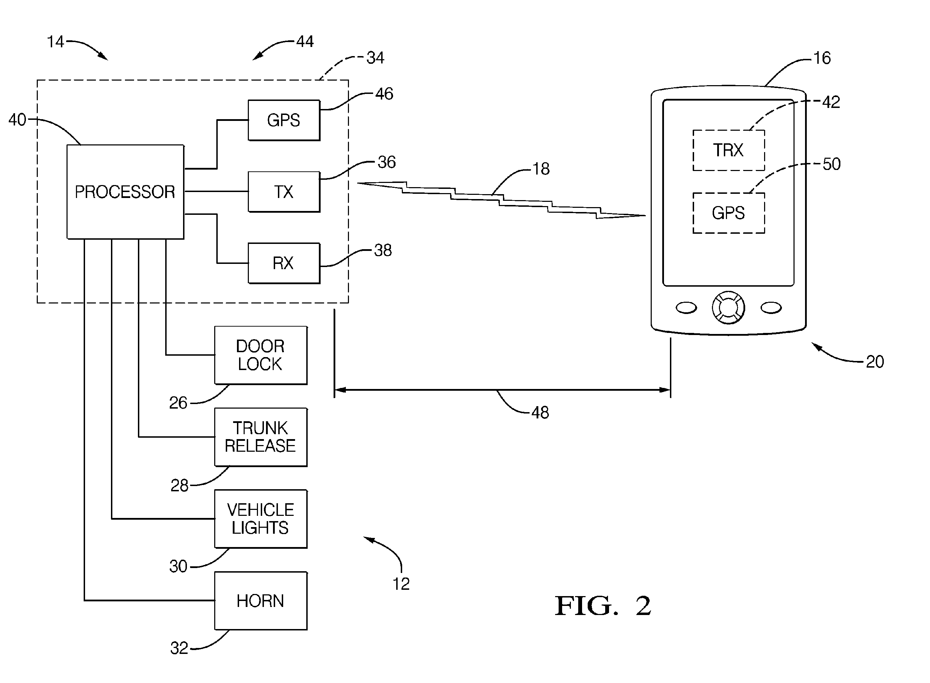

The nomadic device 16 is also configured to determine a present location 20 of the nomadic device 16. As a non-limiting example, the nomadic device 16 may be equipped with a GPS receiver 50 (Fig. 2) to receive global positioning system (GPS) signals 22 from GPS satellites 24 in order to determine the present location 20 of the nomadic device 16. Alternatively, the nomadic device 16 may be equipped with an inertial reference type location determination system configured to determine a relative location of the nomadic device with respect to the vehicle 12. The present location 20, and/or other proximity/distance information of the nomadic device 16 relative to the location of the vehicle 12, is transmitted by the nomadic device 16 in reply to a request transmission from the PEPS 14 so that it can be determined that the nomadic device 16 is within relatively close proximity to the vehicle 12, and thereby reduce the chance of a relay attack being successful.

Fig. 2 illustrates a non-limiting example of a PEPS 14 configured to operate devices within the vehicle 12, for example a door lock 26, a trunk release 28, vehicle lights 30, and a horn 32. The PEPS 14 may include a controller 34 configured to communicate with a nomadic device 16 over a communication link 18. As described above with regard to Fig. 1, the nomadic device 16 may be configured to determine a present location 20 of the nomadic device, and transmit a reply signal indicative of the present location 20 over a communication link 18. The controller 34 may include a transmitter 36 configured to transmit a location request to the nomadic device 16, a receiver 38 configured to receive a signal indicating the present location 20 of the nomadic device 16, and a processor 40 configured to control a security-status based on the present location 20. The processor 40 may include a microprocessor or other control circuitry as should be evident to those in the art. The processor 40 may include memory, including nonvolatile memory, such as electrically erasable programmable read-only memory (EEPROM) for storing one or more routines, thresholds and captured data. The one or more routines may be executed by the processor 40 to perform steps for determining if signals received by the controller 34 are for operating the vehicle security system 10 to control a security-status based on the present location 20 as described herein.

As used herein, the security-status indicates the level of security in effect at any given time. For example, the security-status may be characterized as being in a secure-state where no authorized nomadic device has been detected and so operations such as operating the door lock 26 and flashing the vehicle lights 30 are prevented or inhibited. Alternatively, the PEPS 14 may be configured to activate an alarm (e.g. - sound horn, flash lights, send message to nomadic device 16) if an unauthorized nomadic device is being used to access the vehicle 12. Another security-status may be a ready-state where an authorized nomadic device has been detected and determined to be within relatively close proximity to the vehicle, for example closer than 10 meters, so that the relay-attack problem is minimized. In the ready-state the PEPS 14 may be prepared to operate the door lock 26 or the trunk release 28 the instant contact by a person is detected so that the wall-effect problem is minimized. Also, the communications link 18 may be used to identify the driver approaching the vehicle and/or transfer driver specific data to the vehicle 12 when a driver approaches the vehicle 12 such as, maximum vehicle speed, seat position, music preference, etc. These advantages will become more apparent as the system 10 is described in more detail below.

Continuing to refer to Fig. 2, the nomadic device 16 may be equipped with a transceiver 42 that may be comparable in function to the combination of the transmitter 36 and the receiver 38 illustrated within the controller 34. As such, the nomadic device 16 may be configured to transmit the present location 20 when a location request is received from the controller 34. For example, the controller 40 may periodically transmit a location request, every 0.5 seconds for example, even if no reply is received because, for example, the nomadic device 16 is out-of range to receive the location request. However, when the nomadic device 16 is within-range to receive the location request, for example within 100 meters, the nomadic device 16 may transmit a reply that indicates the present location 20. Transmitting a reply may be allowed or prevented based on other factors such as the distance between the nomadic device 16 and the vehicle 12 as will be described in more detail below.

In one embodiment the controller 40 may be configured to determine a vehicle location 44. One way to determine the vehicle location 44 is to equip the controller 34 with a GPS device 46. Alternatively, the controller 34 may communicate with the nomadic device 16 when the nomadic device 16 is known to be in close proximity to the vehicle 12, for example when the vehicle 12 stops moving or when the vehicle engine is turned off, to acquire the present location 20 of the nomadic device 16 and use that as the vehicle location 44. If the controller 34 obtains the vehicle location 44 and the present location 20 of the nomadic device 16, then the controller 34 may determine or calculate a distance 48 between the nomadic device 16 and the vehicle 12 based on the present location 20 and the vehicle location 44.

Hackers or thieves attempting to gain access to or steal the vehicle 12 using the above described relay attack method rely on a person carrying the nomadic device 16 being far enough away from the vehicle 12 so that the person does not observe or notice that the door lock 26 has been operated, or that a thief has entered the vehicle 12. If the controller 34 has determined the distance 48, then the controller 34 can operate the vehicle 12 based on the distance 48. For example, if the distance 48 is greater than a maximum range, greater than 10 meters for example, then the controller 34 may restrict the security-status to the secure-state, and so even if a person contacts a door handle, the door lock 26 will not operate to an unlocked-state to allow access to the vehicle interior. However if the distance 48 is less than the maximum range, then the controller 34 may set the security-status to the ready-state so that the door lock 26 will operate to the unlocked-state the instant a person contacts a door handle and so minimize the wall-effect problem.

In another embodiment, the nomadic device 16 may be configured to determine a vehicle location 44. For example, when the vehicle is stopped, or the engine is turned off, the controller 34 may send a signal to the nomadic device 16 so the present location 20 is stored as the vehicle location 44 for later use. Then nomadic device 16 may be configured to determine a distance 48 between the nomadic device 16 and the vehicle 12 based on the present location 20 and the previously stored vehicle location. With such a configuration, the nomadic device 16 may then prevent sending a reply to a request for the present location 20 unless the nomadic device is within a maximum range, closer than 10 meters for example, and so the nomadic device 16 does not transmit the distance 48 if the distance 48 is greater than a maximum range. Alternatively, the nomadic device 16 may be configured to always transmit the distance 48 in a reply to a request for the distance 48 from the controller 34. For this case, the controller 34 may then be configured to determine an appropriate security-status based on the distance 48 received from the nomadic device 16.

In another embodiment, the receiver 38 may be configured to determine a direction and/or distance from the receiver 38 to the nomadic device 16, and so may in effect provide a directional transceiver configured to determine a nomadic direction and/or distance (not shown). The receiver 38 may be equipped with multiple antennas (not shown) located at different location about the vehicle, or may be equipped with a directional antenna (not shown) capable of controlling the size and shape of the antenna's reception area. Being able to determine the nomadic direction and/or distance may be useful to automate certain vehicle operations such as automatically operating the trunk release 28 if the nomadic device 16 is close to the trunk, possibly for some period of time, and so may be interpreted as the person carrying the nomadic device 16 having an arm load of groceries and is unable to touch the trunk area to activate the trunk release 28. Such a scenario may be predetermined, that is the person may program the nomadic device 16 or the controller 34 to respond in a certain way when the nomadic device 16 returns to the vehicle 12 after being away, for example buying groceries.

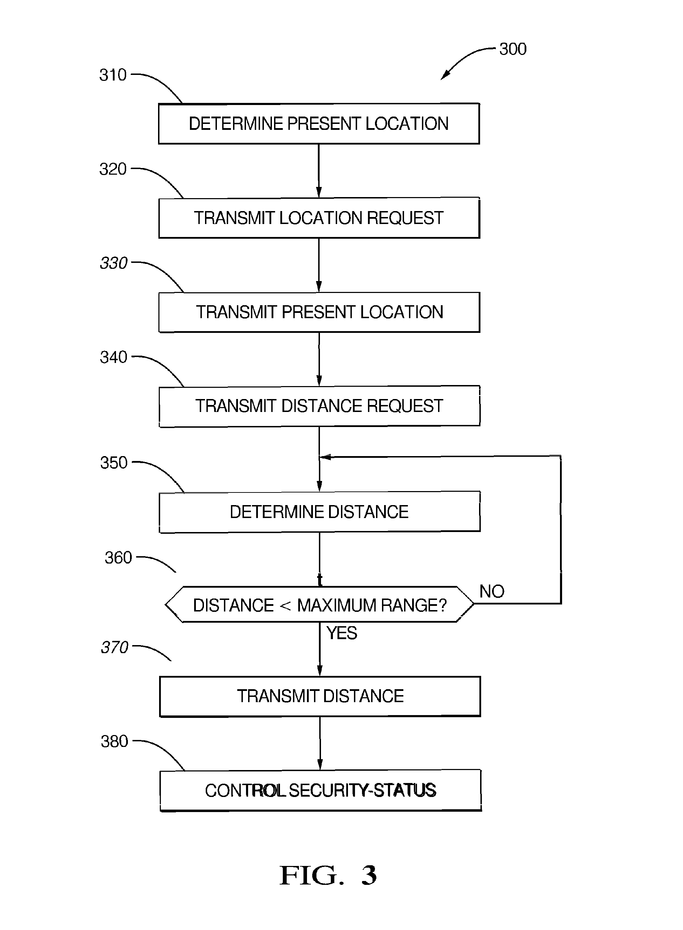

Fig. 3 illustrates a non-limiting example of a method of operating a vehicle security system 10. As will be apparent in the description below, some of the steps illustrated are optional, and so are presented as illustrated only for the purpose of explanation and not limitation.

Step 310, DETERMINE PRESENT LOCATION, may include determining a present location 20 of the nomadic device 16. Step 310 may also include equipping the nomadic device with a GPS receiver 50 or an inertial guidance system to enable determining the present location 20.

Step 320, TRANSMIT LOCATION REQUEST, may include transmitting a location request to the nomadic device 16 by the controller 34.

Step 330, TRANSMIT PRESENT LOCATION, may include replying to the location request by the nomadic device 16 transmitting the present location 20.

Step 340, TRANSMIT DISTANCE REQUEST, is an optional step that may include transmitting a distance request to the nomadic device 16 by the controller 34 to request that the nomadic device determine the distance 48.

Step 350, DETERMINE DISTANCE, may include determining a distance 48 between the present location 20 and a vehicle location 44 may be performed by the nomadic device 16 as described with regard to step 340, or may be performed by the controller 34. In either case, a vehicle location 44 is generally required in order to be able to determine the distance 48 between the nomadic device 16 and the vehicle 12.

Step 360, DISTANCE < MAXIMUM RANGE?, may performed by the nomadic device 16 to decide if the distance 48 is short enough to justify transmitting a signal indicating the distance 48 from nomadic device to the controller. Alternately, the decision regarding if the distance 48 is less than a maximum range may be performed by the controller in order to determine if the security-status should changed or held at some current state.

Step 370, TRANSMIT DISTANCE, may include the nomadic device 16 replying to a distance request from the controller 34. In one embodiment, as suggested by the flowchart at step 360, replying to a distance request by the nomadic device 16 transmitting the distance 48 to the controller 34 may be delayed until the distance 48 is less than the maximum range.

Step 380, CONTROL SECURITY-STATUS, may include the controller selecting a security-status based on the present location 20 of the nomadic device. If the nomadic device 16 is relatively far away, greater than 30 meters for example, then the security-status may be selected to be in the secure-state where any attempt to open a door or start the engine may be prevented. However, if the nomadic device is relatively close by, the security status may be selected to the ready-state so that any subsequent indication to open a door lock 26 or start the vehicle engine will be quickly executed.

Accordingly, a vehicle security system 10, a controller 34 for the vehicle security system 10 and a method 300 of operating the vehicle security system 10 is provided. The risk of unauthorized vehicle entry or vehicle theft is reduced, particularly for a vehicle equipped with a passive keyless entry/passive start security system or PEPS 14, because any enabling of the PEPS 14 requires that the nomadic device 16 authorized to unlock or start the vehicle 12 be in relatively close proximity to the vehicle 12. This close proximity requirement thwarts attempts by hackers or thieves to employ a so-called relay attack method since the close proximity requirements means that the vehicle owner would be readily able to observe any attempt to enter or steal the vehicle 12. Furthermore, the advanced warning to the PEPS 14 of the nomadic device 16 approaching the vehicle 12 allows the PEPS 14 to make preparations for unlocking the doors by completing the request/reply communications exchange with the nomadic device 16 in order to verify the authenticity of the nomadic device 16.

While this invention has been described in terms of the preferred embodiments thereof, it is not intended to be so limited, but rather only to the extent set forth in the claims that follow.

## Claims

1. A vehicle security system (10) for a vehicle (12) equipped with a passive keyless entry/passive start security system (14) (PEPS (14)), said system (10) comprising:
a nomadic device (16) configured to determine a present location (20) of the nomadic device (16); and
a controller (34) configured to control a security-status based on the present location (20).

2. The system (10) in accordance with claim 1, wherein the nomadic device (16) is configured to transmit the present location (20) when a location request is received from the controller (34).

3. The system (10) in accordance with claim 1 or 2, wherein the controller (34) is configured to determine a vehicle location (44).

4. The system (10) in accordance with claim 3, wherein the controller (34) determines a distance (48) between the nomadic device (16) and the vehicle (12) based on the present location (20) and the vehicle location (44).

5. The system (10) in accordance with claim 4, wherein the security-status includes at least a secure-state and a ready-state, and the security-status is restricted to the secure-state if the distance (48) is greater than a maximum range.

6. The system (10) in accordance with anyone of claims 1 to 5, wherein the nomadic device (16) is configured to determine a vehicle location (44) and to determine a distance (48) between the nomadic device (16) and the vehicle (12) based on the present location (20) and the vehicle location (44).

7. The system (10) in accordance with claim 6, wherein the nomadic device (16) is configured to transmit the distance (48) when a distance (48) request is received from the controller (34), unless the distance (48) is greater than a maximum range.

8. The system (10) in accordance with anyone of the preceding claims, wherein the system (10) further comprises a directional transceiver (42) configured to determine a nomadic direction.

9. The system (10) in accordance with anyone of the preceding claims, wherein the controller (34) comprises:
a transmitter (36) configured to transmit a location (20) request to the nomadic device (16);
a receiver (38) configured to receive the present location (20) of the nomadic device (16); and
a processor (40) configured to control a security-status based on the present location (20).

10. A method (300) of operating a vehicle security system (10), said method (300) comprising the steps of:
determining (310) a present location (20) of the nomadic device (16); and
controlling (380) a security-status based on the present location (20).

11. The method (300) of claim 10, wherein the method (300) further comprises the steps of:
transmitting (320) a location (20) request to the nomadic device (16) and
replying to the location (20) request by the nomadic device (16) transmitting (330) the present location (20).

12. The method (300) in accordance with anyone of claim 10 or 11, wherein the method (300) further comprises the steps of:
transmitting (340) a distance (48) request to the nomadic device (16)
determining (350) a distance (48) between the present location (20) and a vehicle location (44) and
replying to a distance (48) request by the nomadic device (16) transmitting (370) the distance (48).

13. The method (300) of claim 12, wherein the step of replying to a distance (48) request is performed only if the distance (48) between the present location (20) and a vehicle location (44) is less than a maximum range.
